# EUROPÄISCHE PATENTSCHRIFT

(11) **EP 0 993 563 B1**
(45) Veröffentlichungstag und Bekanntmachung des Hinweises auf die Patenterteilung: **14.05.2003**
(21) Anmeldenummer: 98912283.3
(22) Anmeldetag: 20.02.1998
(51) Int. Cl.: F16D 27/00, B60K 23/02

(54) **STELLANTRIEB FÜR EINE FAHRZEUGKUPPLUNG**
SERVO-ACTUATOR FOR A CAR CLUTCH
SERVO-MOTEUR POUR EMBRAYAGE

(30) Priorität: 05.07.1997 DE 19728829
(43) Veröffentlichungstag der Anmeldung: 19.04.2000
(73) Patentinhaber: ROBERT BOSCH GMBH, 70442 Stuttgart (DE)
(72) Erfinder: CAMPHAUSEN, Hanno, D-72461 Albstadt (DE); HESSDOERFER, Robert, D-97753 Karlstadt-Stetten (DE)
(86) Internationale Anmeldenummer: DE9800509
(87) Internationale Veröffentlichungsnummer: WO99002880

(56) Entgegenhaltungen:
- EP-A- 0 260 399
- EP-A- 0 590 240
- DE-A- 3 706 849
- DE-A- 4 138 625
- US-A- 4 865 151

## Beschreibung

### Stand der Technik

Die Erfindung betrifft einen Stellantrieb für eine Fahrzeugkupplung der im Oberbegriff des Anspruchs 1 definierten Gattung.

Es ist schon ein solcher Stellantrieb bekannt (EP 0 260 399 A), welcher einen Elektromotor mit einer Schnecke auf seiner Antriebsachse aufweist, die mit einem Schneckenrad in Eingriff steht. Auf einer Achse des Schneckenrads sitzt drehfest eine Seilrollen-Segmentscheibe mit einer umfangsseitigen Seilführungsnut, in der ein mit der Segmentscheibe verbundenes Zugseil aufgenommen ist. Das Zugseil führt zu einem von einer Kupplungseinrückfeder beaufschlagten Kupplungshebel einer Fahrzeugkupplung. An der Segmentscheibe greift mit Abstand zu deren Drehachse über mehrere Koppelglieder ein Kraftspeicher an, welcher als Speicherglied eine Spiralfeder besitzt. Der bekannte Steilantrieb ist relativ aufwendig ausgebildet.

Bei Drehen des Elektromotors dreht die Schnecke das Schneckenrad, dessen Drehbewegung auf die Seilrollen-Segmentscheibe übertragen wird. Beim Aufwickeln des Zugseils auf die Seilrollen-Segmentscheibe wird eine Zugkraft erzeugt und mittels des Zugseils auf den Kupplungshebel der Fahrzeugkupplung übertragen, so daß der Kupplungshebel gegen die Kraft der Kupplungseinrückfeder verschwenkt wird und so die Kupplung löst. Dabei erzeugt der exzentrisch an der Segmentscheibe angreifende Kraftspeicher ein Zusatzdrehmoment, das die vom Elektromotor eingeleitete Drehbewegung des Schneckenrads zum Ausrücken der Kupplung unterstützt, so daß die gegen die Verstellbewegung des Zugseils wirkende Federkraft der Kupplungseinrückfeder weitgehend kompensiert wird und der Elektromotor nur für kleine Leistung ausgelegt zu werden braucht. Beim Wiedereinrücken der Kupplung wird der Kraftspeicher über das invers drehende Schneckenrad und die Seilrollen-Segmentscheibe wieder von dem Elektromotor gespannt, wobei die Kupplungseinrückfeder kraftunterstützend wirkt.

Bei einem anderen bekannten Stellantrieb (DE 37 06 849 A) ist das Ausgangsglied als ein in einem hydraulischen Arbeitszylinder axial verschieblich geführter Arbeitskolben ausgebildet, der über eine Kurbelstange ebenso wie ein Federkraftspeicher an zwei um eine Achse verschwenkbare kreissegmentförmige Wangen angelenkt ist. Zwischen den beiden Wangen liegt ein mit diesen drehfest verbundenes Schneckenradsegment, mit dem ein von einem Elektromotor antreibbares Schneckenrad in Eingriff steht. Auch dieser bekannte Stellantrieb besitzt zahlreiche Bauteile und ist daher sehr kostenaufwendig.

### Vorteile der Erfindung

Der erfindungsgemäße Stellantrieb mit den Merkmalen des Anspruchs 1 hat den Vorteil, daß er aufgrund der einstückigen Ausbildung von Schneckenrad und Seilrolle und dem direkten Angriff des Kraftspeichers am Schneckenrad eine gedrungene, kompakte Bauform mit wenigen Einzelteilen ermöglicht.

Durch die in den weiteren Ansprüchen aufgeführten Maßnahmen sind vorteilhafte Weiterbildungen und Verbesserungen des im Anspruch 1 angegebenen Stellantriebs möglich.

Gemäß einer vorteilhaften Ausführungsform der Erfindung greift am Schneckenrad im Radialabstand zu dessen Drehachse ein vorzugsweise als Zug- oder Druckfeder ausgebildeter Kraftspeicher an, der bei einem das Ausrücken der Kupplung bewirkenden Verdrehen des Schneckenrads ein gleichsinniges Zusatzdrehmoment am Schneckenrad erzeugt. Der Radialabstand des Angriffspunkts des Kraftspeichers von der Drehachse des Schneckenrads ist dabei kleiner gewählt als der Radialabstand der Seilführungsnut im Schneckenrad von der Drehachse des Schneckenrads. Diese konstruktiven Maßnahmen läßt am Zugseil eine in Zugrichtung des Seils wirkende, über den Zugweg des Seils nichtlineare Kompensationskraft entstehen, die die über den Kupplungsausrückweg wirkende Federkraft der Kupplungseinrückfeder an jeder Stelle des Verstellwegs optimal kompensiert.

### Zeichnung

Die Erfindung ist anhand eines in der Zeichnung dargestellten Ausführungsbeispiels in der nachfolgenden Beschreibung näher erläutert. Es zeigen:
Fig. 1 ausschnittsweise einen Längsschnitt eines Stellantriebs für die Fahrzeugkupplung, schematisch dargestellt,
Fig. 2 einen Schnitt längs der Linie II-II in Fig. 1,
Fig. 3 eine schematische Darstellung einer von dem Stellantrieb gemäß Fig. 1 und 2 betätigten Fahrzeugkupplung.

### Beschreibung des Ausführungsbeispiels

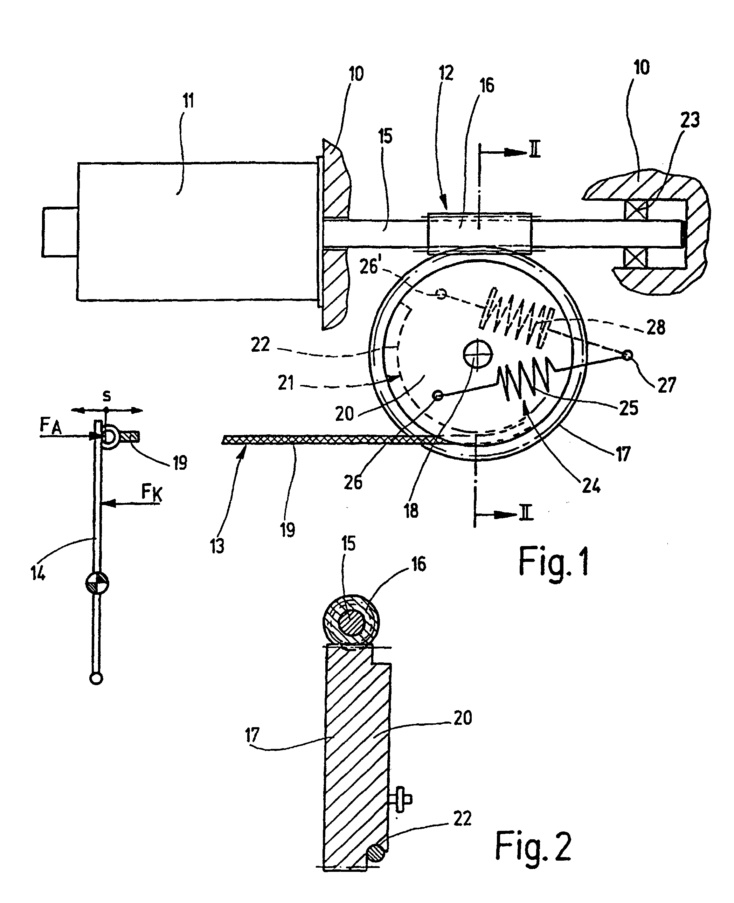

Der in Fig. 1 ausschnittweise im, Längsschnitt zu sehende Steilantrieb für eine Fahrzeugkupplung weist ein Gehäuse 10 auf, an dem ein Elektromotor 11 angeflanscht ist, der über ein im Gehäuse 10 aufgenommenes Schneckengetriebe 12 ein Ausgangsglied 13 betätigt, das einen Kupplungshebel 14 einer Fahrzeugkupplung beaufschlagt.

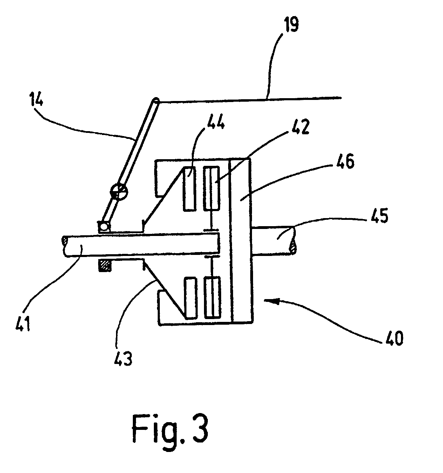

In Fig. 3 ist ein Beispiel einer bekannten und beispielsweise in der DE 43 20 204 A1 beschriebenen Fahrzeugkupplung schematisch dargestellt. Die als Reibungskupplung 40 konzipierte Fahrzeugkupplung weist eine mit einer Getriebeeingangswelle 41 drehfest verbundene Kupplungsscheibe 42 auf, die von einer hier als Membranfeder ausgebildeten Kupplungseinrückfeder 43 reibschlüssig zwischen einer Anpreßplatte 44 und einer mit einer Kurbelwelle 45 der Brennkraftmaschine des Fahrzeugs verbundenen Gegenanpreßplatte 46 in Form eines Schwungrads einspannbar ist. Mittels des vom Ausgangsglied 13 betätigten Kupplungshebel 14, der die Anpreßplatte 44 axial zu verschieben vermag, ist die Reibungskupplung 14 gegen die Kraft der Kupplungseinrückfeder 42 auskuppelbar. Fig. 3 zeigt die Reibungskupplung 40 in Auskuppelstellung, Fig. 1 die Stellung des Ausgangsglieds 13 und des Kupplungshebels 14 bei eingerückter Reibungskupplung 40. In Fig. 1 ist die Federkraft der Kupplungseinrückfeder mit F_{K} und die Antriebskraft, mit dem das Ausgangsglied 13 an dem Kupplungshebel 14 angreift, mit F_{A} bezeichnet. Der Verstellweg des Kupplungshebels 14 ist durch Doppelpfeil s angedeutet.

Das die Rotationsbewegung des Elektromotors 11 in eine Translationsbewegung des Ausgangsglieds 13 umsetzende, selbsthemmend ausgebildete Schneckengetriebe 12 weist eine auf der Abtriebswelle 15 des Elektromotors 11 drehfest sitzende Schnecke 16 und ein mit der Schnecke 16 in Eingriff stehendes Schneckenrad 17 auf, das im Gehäuse 10 um eine Drehachse 18 drehbar gelagert ist. Das Ausgangsglied 13 ist hier als zugseil 19 ausgebildet, das mitdem einen Seilende auf einer Seilrolle 20 mit Seilführung 21 festgelegt ist, während das andere Seilende am Kupplungshebel 14 befestigt ist. Wie aus der Schnittdarstellung in Fig. 2 hervorgeht, sind Schneckenrad 17 und Seilrolle 20 einstückig miteinander ausgebildet, indem die Seilführung 21 als eine in das Schneckenrad 17 eingebrachte Nut 22 ausgebildet ist, die sich über mindestens einen Teil des Schneckenradumfangs erstreckt.

Am Schneckenrad 17 greift im Radialabstand zu dessen Drehachse 18 ein Kraftspeicher 24 an, der bei einer das Ausrücken der Kupplung bewirkenden Verdrehung des Schneckenrads 17 ein gleichsinniges Zusatzdrehmoment am Schneckenrad 17 erzeugt. Im Ausführungsbeispiel der Fig. 1 ist der Kraftspeicher 24 als zugfeder 25 ausgebildet, deren Angriffspunkt am Schneckenrad 17 mit 26 und deren Widerlager im Gehäuse 10 mit 27 bezeichnet ist. Der Radialabstand des Angriffspunkts 26 von der Drehachse 18 ist dabei kleiner gewählt als der Radius der Seilführung 21 bzw. der Nut 22. Anstelle einer Zugfeder 25 kann auch - wie in Fig. 1 strichliniert angedeutet ist - eine Druckfeder 28 Verwendung finden, deren Angriffspunkt 26' dann jenseits der Drehachse 18 zu verlegen ist, um ein gleichsinnig wirkendes Zusatzdrehmoment auf das Schneckenrad 17 zu erzeugen.

Zum Ausrücken der Kupplung wird der Elektromotor 11 eingeschaltet, wodurch seine Abtriebswelle 15 über die Schnecke 16 das Schneckenrad 17 um einen Drehwinkel in Fig. 1 entgegen Uhrzeigersinn verstellt. Dadurch wird eine Zugkraft auf das Zugseil 19 ausgeübt, die so gerichtet ist, daß der Kupplungshebel 14 in Fig. 1 im Uhrzeigersinn gegen die Federkraft F_{K} geschwenkt wird. Gleichzeitig erzeugt die Federkraft der Zugfeder 25 an dem Schneckenrad 17 ein Drehmoment, das zusätzlich das Schneckenrad 17 entgegen Uhrzeigersinn antreibt. Durch die Lage des Angriffspunkts 26 am Schneckenrad 17 kann das Drehmoment so eingestellt werden, daß die auf das Zugseil 19 wirkende zusätzliche Zugkraft über den Verschiebeweg s nichtlinear ist und an jeder Stelle des Verschiebewegs s des Kupplungshebels 14 der auf den Kupplungshebel 14 in Gegenrichtung wirkenden Kraft F_{K} der Kupplungseinrückfeder entspricht. Dadurch wird beim Ausrücken der Kupplung die Federkraft F_{K} der meist als Tellerfeder ausgebildeten Kupplungseinrückfeder optimal kompensiert, so daß der Elektromotor 11 nur noch eine relativ kleine Leistung zum Ausrücken der Kupplung aufbringen muß. Die von Elektromotor 11 und Zugfeder 25 auf das Zugseil 19 und damit an den Kupplungshebel 14 insgesmat aufgebrachte Zugkraft ist in Fig. 1 mit F_{A} bezeichnet.

Zum Wiedereinrücken der Kupplung wird der Elektromotor 11 umgepolt und dadurch das Schneckenrad 17 in Fig. 1 im Uhrzeigersinn angetrieben. Unter der Wirkung der Kupplungseinrückfeder schwenkt der Kupplungshebel 14 wieder zurück und die Kupplung wird eingerückt. Gleichzeitig wird durch das Drehen des Schneckenrads 17 die Zugfeder 25 wieder gespannt. Das Spannen der Zugfeder 25 wird unterstützt durch die Federkraft F_{K} der Kupplungseinrückfeder, die nunmehr als Zugkraft an dem Zugseil 19 wirkt. Da durch die Auslegung der Zugfeder 25 die Kräfte von Kupplungseinrückfeder und Zugfeder 25 annähernd gleich groß sind, muß der Elektromotor 11 zum Spannen der Zugfeder 25 ebenfalls nur eine recht kleine Leistung aufbringen. Der Elektromotor 11 kann damit insgesamt relativ klein ausgelegt werden, was dem angestrebten kleinen Bauvolumen des Stellantriebs zusätzlich zugute kommt.

## Patentansprüche

1. Stellantrieb für eine Fahrzeugkupplung mit einem als Zugseil (19) ausgebildeten Ausgangsglied (13) zum Ausrücken der Fahrzeugkupplung, wobei das Zugseil (19) auf einer Seilrolle (20) mit Seilführung (21) festgelegt ist,
mit einem eine rotatorische Eingangsbewegung eines
Elektromotors (11) in eine Translationsbewegung des Ausgangsglieds (13) umsetzenden Schneckengetriebe (12), das eine vom Elektromotor (11) antreibbare Schnecke (16) und ein mit dieser in Eingriff stehendes, drehbar gelagertes Schneckenrad (17) aufweist,
sowie mit einem Kraftspeicher (24), der bei einem das Ausrücken der Kupplung bewirkenden Verdrehen des Schneckenrads (17) ein gleichsinniges Zusatzdrehmoment am Schneckenrad (17) erzeugt,
**dadurch gekennzeichnet,**
**daß** das Schneckenrad (17) und die Seilrolle (20) miteinander einstückig ausgebildet sind und die Seilführung (21) von einer in das Schneckenrad (17) eingebrachten Nut (22) gebildet ist, die sich über mindestens einen Teil des Schneckenradumfangs erstreckt,
und **daß** der Kraftspeicher (24) unmittelbar am Schneckenrad (17) in einem Radialabstand zu dessen Drehachse (18) angreift.

2. Stellantrieb nach Anspruch 1, **dadurch gekennzeichnet, daß** der Radialabstand des Angriffspunkts (26) des Kraftspeichers (24) am Schneckenrad (17) von der Drehachse (18) des Schneckenrads (17) kleiner ist als der Radialabstand der Seilführungsnut (22) im Schneckenrad (17) von dessen Drehachse (18).

3. Stellantrieb nach Anspruch 2, **dadurch gekennzeichnet, daß** der Kraftspeicher (24) als Zug- oder Druckfeder (25, 28) ausgebildet ist.

## Claims

1. Actuating drive for a vehicle clutch, with an output member (13), designed as a traction rope (19), for the disengagement of the vehicle clutch, the traction rope (19), being secured on a rope pulley (20) having a rope guide (21), with a wormgear (12) which converts a rotational input movement of an electric motor (11) into a translational movement of the output member (13) and which has a worm (16), drivable by the electrical motor (11), and a rotatably mounted worm-wheel (17) which is in engagement with the worm, and with a force accumulator (24) which, when the worm-wheel (17) is rotated so as to bring about the disengagement of the clutch, generates a codirectional additional torque on the worm-wheel (17), **characterized in that** the worm-wheel (17) and the rope pulley (20) are produced in one piece with one another, and the rope guide (21) is formed by a groove (22) which is introduced into the worm-wheel (17) and which extends over at least part of the worm-wheel circumference, and **in that** the force accumulator (24) acts directly on the worm-wheel (17) at a radial distance from the axis of rotation (18) of the latter.

2. Actuating drive according to Claim 1,
**characterized in that** the radial distance of the point (26) of action of the force accumulator (24) on the worm-wheel (17) form the axis of rotation (18) of the worm-wheel (17) is smaller than the radial distance of the rope-guide groove (22) in the worm-wheel (17) from the axis of rotation (18) of the latter.

3. Actuating drive according to Claim 2, **characterized in that** the force accumulator (24) is designed as a tension or compression spring (25, 28).

## Revendications

1. Mécanisme de commande pour un embrayage de véhicule comprenant
- une bielle de sortie (13) formée en tant que câble tracteur (19) pour désaccoupler l'embrayage de véhicule, le câble tracteur (19) étant maintenu sur une poulie (20) avec un guidage de câble (21),
- un entraînement à vis sans fin (12) qui transforme un mouvement initial rotatif d'un moteur électrique (11) en un mouvement de translation de la bielle de sortie (13), et qui comprend une vis sans fin (16) que peut entraîner le moteur électrique (11) et une roue hélicoïdale (17) logée de manière à tourner et qui a prise avec celle-ci, ainsi qu'
- un accumulateur de force (24) qui produit un couple de rotation supplémentaire dans le même sens sur la roue hélicoïdale (17) lors d'une rotation de la roue hélicoïdale (17) provoquant le désaccouplement de l'embrayage,
**caractérisé en ce que**
la roue hélicoïdale (17) et la poulie (20) sont conjointement formées d'une seule pièce et le guidage de câble (21) est formé par une rainure (22) ménagée dans la roue hélicoïdale (17), laquelle s'étend au moins sur une partie du pourtour de la roue hélicoïdale, et
l'accumulateur de stockage de force (24) est appliqué immédiatement sur la roue hélicoïdale (17) à une distance radiale par rapport à son axe de rotation (18).

2. Mécanisme de commande selon la revendication 1,
**caractérisé en ce que**
la distance radiale du point d'application (26) de l'accumumateur de force (24) sur la roue hélicoïdale (17) par rapport à l'axe de rotation (18) de la roue hélicoïdale (17) est plus petite que la distance radiale de la rainure de guidage de câble (22) dans la roue hélicoïdale (17) par rapport à son axe de rotation (18).

3. Mécanisme de commande selon la revendication 2,
**caractérisé en ce que**
l'accumulateur de force (24) est formé en tant que ressort de traction ou de compression (25, 28).
